(19) Europäisches Patentamt
European Patent Office
Office européen des brevets

(11) EP 3 783 062 A1

# (12) EUROPEAN PATENT APPLICATION
published in accordance with Art. 153(4) EPC

(43) Date of publication:
**24.02.2021 Bulletin 2021/08**

(21) Application number: **19787719.4**

(22) Date of filing: **11.04.2019**

(51) Int Cl.:
***C08L 27/06*** *(2006.01)*
***C08K 5/00*** *(2006.01)*
***C08K 5/101*** *(2006.01)*
***C08K 5/103*** *(2006.01)*
***C08K 5/521*** *(2006.01)*
***C08J 9/04*** *(2006.01)*
***D21H 27/20*** *(2006.01)*

(86) International application number:
**PCT/KR2019/004371**

(87) International publication number:
**WO 2019/203498 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.04.2018 KR 20180044632**
**10.04.2019 KR 20190041998**

(71) Applicant: **Hanwha Solutions Corporation**
**Jung-gu**
**Seoul 04541 (KR)**

(72) Inventors:
- **JANG, Tae Young**
  **Daejeon 34128 (KR)**
- **KIM, Jae Song**
  **Daejeon 34128 (KR)**
- **RYOO, Sung Min**
  **Daejeon 34128 (KR)**

(74) Representative: **Gevers Patents**
**Intellectual Property House**
**Holidaystraat 5**
**1831 Diegem (BE)**

## (54) VINYL CHLORIDE RESIN COMPOSITION FOR WALL PAPER HAVING IMPROVED DISCOLORATION RESISTANCE

(57) There is provided a vinyl chloride resin composition for wallpaper that is environmentally friendly and has remarkably improved discoloration resistance.

【Fig. 2】

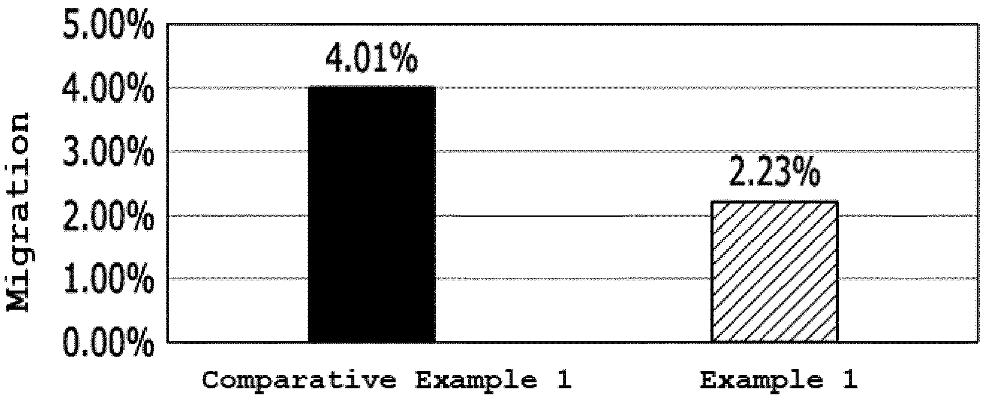


EP 3 783 062 A1

## Description

### [TECHNICAL FIELD]

Cross-reference to Related Application(s)

This application claims the benefit of Korean Patent Application No. 10-2018-0044632 filed on April 17, 2018 and Korean Patent Application No. 10-2019-0041998 filed on April 10, 2019 with the Korean Intellectual Property Office, the disclosures of which are herein incorporated by reference in their entirety.

The present disclosure relates to a vinyl chloride resin composition for a wallpaper that is environmentally friendly and has remarkably improved discoloration resistance.

### [BACKGROUND ART]

A vinyl chloride resin is a homopolymer of vinyl chloride or a copolymer containing 50% or more of vinyl chloride, and is one of 5 commercial thermoplastic plastic resins prepared by suspension polymerization and emulsion polymerization. Among them, a vinyl chloride resin prepared by emulsion polymerization is mixed with supplementary materials having special functions, such as a plasticizer, a stabilizer, filler, a blowing agent, pigment, and the like, and is used in various fields such as flooring, wallpaper, tarpaulin, artificial leather, toys, coating materials of the lower part of automobiles, and the like, through coating and mold coating in the form of plastisol.

A wallpaper is a product most exposed in residential and office spaces, and 60% or more of them are prepared using vinyl chloride resin. Recently, the main issue of wallpaper relates to environmental friendliness, and a standard of judgment on environmental friendliness is determined by HB grades (very excellent, excellent, good) according to discharge amount of volatile organic compounds (VOCs) enforced by Korea Air Cleaning Association, and by whether or not containing a phthalate-based plasticizer that is suspected of environmental hormone, which is an endocrine disrupter disturbing or confusing hormone action of human.

A wallpaper using a vinyl chloride resin is prepared by mixing solid raw materials such as pigment, and the like, and liquid raw materials such as a plasticizer, a stabilizer, a viscosity depressant, and the like with a vinyl chloride resin to prepare plastisol, and then, coating the plastisol on a paper, and conducting processing operations such as gelling, printing, foaming and embossing, and the like.

In the vinyl chloride resin composition, a plasticizer is a liquid component occupying a large content, and it exist while being mixed with the vinyl chloride resin, and then, as time elapses, it is gradually discharged outside of the vinyl chloride resin, exhibiting migration. If discharged plasticizer is inflowed into the body, it may inhibit normal activities of endocrine system directly involved in life activity or provoke abnormal reactions to cause fatal harm, and thus, the migration of the plasticizer is an important reason for limiting the use of a plasticizer, particularly a phthalate-based plasticizer in flooring, wallpaper, tarpaulin, artificial leather, toys, coating material of the lower part of automobiles, and the like, which may have a direct influence on the body.

And, in the case of an environmentally friendly silk wallpaper, unlike the existing wallpaper, a phthalate-based plasticizer cannot be used, and thus, a DOTP (dioctyl phthalate)-based non-phthalate-based plasticizer is mainly used, but since the DOTP-based plasticizer easily migrates and is prone to dye transfer due to good compatibility with dye, if a silk wallpaper is constructed on a plaster board, dye included in the plaster board paper may be transferred to the surface of the silk wallpaper, thus considerably generating spots and discolorations.

Meanwhile, when preparing a wallpaper, the viscosity of plastisol is an important property determining coatability during a coating process and the productivity of the wallpaper, and the lower the viscosity, more favorable. However, volatile organic compounds generated in the vinyl chloride resin-based wallpaper are mostly generated from a viscosity depressant added to lower the viscosity of plastisol, a liquid stabilizer and the solvent of oil-based ink used in a printing process. Particularly, if the viscosity depressant is excessively added, not only volatile organic compounds may be generated, but also product quality may be deteriorated. Thus, in order to reduce the generation of volatile organic compounds, it is required to minimize the amount of the viscosity depressant and liquid stabilizer added, which are causes of the generation of volatile organic compounds.

### [DETAILED DESCRIPTION OF THE PRESENT DISCLOSURE]

### [TECHNICAL PROBLEM]

In order to solve the problems of the prior art, there is provided a vinyl chloride resin composition for a wallpaper that is environmentally friendly and has remarkably improved discoloration resistance.

**[TECHNICAL SOLUTION]**

According to one embodiment of the invention, there is provided a vinyl chloride resin composition for a wallpaper comprising

a) 100 parts by weight of vinyl chloride resin,
b) 50 to 90 parts by weight of a plasticizer;
c) 5 to 20 parts by weight of a carboxylic acid ester-based viscosity depressant ; and
d) 0.5 to 5 parts by weight of acidic ester-based dispersant;

wherein the b) plasticizer comprises di(2-ethylhexyl)cyclohexane-1,4-dicarboxylate, or a mixture of di(2-ethylhexyl)cyclohexane-1,4-dicarboxylate and a compound represented by the following Chemical Formula 1:

[Chemical Formula 1]

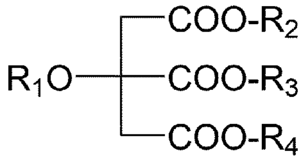

in the Chemical Formula 1,

$R_1$ is hydrogen or acetyl, and
$R_2$ to $R_4$ are each independently, $C_{2-8}$ alkyl.

According to another embodiment of the invention, there is provided a wallpaper comprising the above vinyl chloride resin composition.

**[ADVANTAGEOUS EFFECTS]**

The vinyl chloride resin composition for a wallpaper according to the present disclosure uses a plasticizer comprising di(2-ethylhexyl)cyclohexane-1,4-dicarboxylate(DEHCH), or a mixture of DEHCH and a compound represented by the above Chemical Formula 1, in combination with a carboxylic ester-based viscosity depressant and an acidic ester-based dispersant having excellent compatibilities therewith, thereby exhibiting excellent migration resistance, and as the result, dye transfer may be prevented and remarkably improved discoloration resistance may be exhibited.

And, the vinyl chloride resin composition may prevent generation of environmental problems because the content of liquid additives such as a plasticizer, diffused outside when applied for a wallpaper, and the like, is significantly decreased.

And, the vinyl chloride resin composition comprises a carboxylic acid ester-based viscosity depressant together with the plasticizer, thereby exhibiting low viscosity, and as the result, the contents of a viscosity depressant added to decrease the viscosity of plastisol, and a liquid stabilizer as other additives optionally included, may be minimized, and generation of volatile organic compounds generated from the viscosity depressant and liquid stabilizer and the resulting deterioration of product quality may be prevented.

Although the vinyl chloride resin composition may be used for flooring, wallpaper, tarpaulin, artificial leather, toys, or coating material of the lower part of automobiles, since it is environmentally friendly and has excellent discoloration resistance, it may be particularly useful for the preparation of an environmentally friendly silk wallpaper.

**[BRIEF DESCRIPTION OF THE DRAWINGS]**

Fig. 1 a schematic diagram showing discoloration mechanism generated in a wallpaper due to dye in a plaster board.
Fig. 2 is a graph showing the results of evaluating migration of plastisols of Example 1 and Comparative Example 1.
Fig. 3a is a photograph observing discoloration of an oilpaper when evaluating migration of plastisol of Comparative Example 1, and Fig. 3b is a photograph observing discoloration of an oilpaper when evaluating migration of plastisol of Example 1.

Fig. 4 is a graph showing the results of measuring the viscosities of plastisols of Example 1 and Comparative Example 1.

## [DETAILED DESCRIPTION OF THE BEST EMBODIMENTS]

The terms used herein are only to explain specific embodiments, and are not intended to limit the present invention. A singular expression includes a plural expression thereof, unless it is expressly stated or obvious from the context that such is not intended. As used herein, the terms "comprise" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

Although various modifications can be made to the present invention and the present invention may have various forms, specific examples will be illustrated and explained in detail below. However, it should be understood that these are not intended to limit the present invention to specific disclosure, and that the present invention includes all the modifications, equivalents or replacements thereof without departing from the spirit and technical scope of the invention.

As used herein, the term "vinyl chloride resin composition" includes "plastisol" representing a mixture of a resin and a plasticizer that are mixed so as to be molded, casted or processed into a continuous film by heating, and the plastisol may represent, for example, a paste comprising a vinyl chloride resin and a plasticizer.

Hereinafter, a vinyl chloride resin composition for a wallpaper according to specific embodiment of the invention will be explained in more detail.

The vinyl chloride resin composition for a wallpaper according to one embodiment comprises

a) 100 parts by weight of vinyl chloride resin,
b) 50 to 90 parts by weight of a plasticizer;
c) 5 to 20 parts by weight of a carboxylic acid ester-based viscosity depressant ; and
d) 0.5 to 5 parts by weight of acidic ester-based dispersant;

wherein the b) plasticizer comprises di(2-ethylhexyl)cyclohexane-1,4-dicarboxylate, or a mixture of di(2-ethylhexyl)cyclohexane-1,4-dicarboxylate and a compound represented by the following Chemical Formula 1:

[Chemical Formula 1]

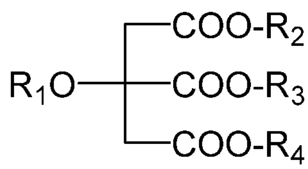

in the Chemical Formula 1,

$R_1$ is hydrogen or acetyl, and
$R_2$ to $R_4$ are each independently, $C_{2-8}$ alkyl.

Hereinafter, each constructional element will be explained in detail.

### a) Vinyl chloride resin

In the vinyl chloride resin composition according to one embodiment, the vinyl chloride resin may be a homopolymer homopolymerized from vinyl chloride monomers, or a copolymer polymerized from vinyl chloride monomers and comonomers copolymerizable therewith, and one of them or a mixture thereof may be used for the preparation a vinyl chloride resin composition.

As the comonomers copolymerizable with vinyl chloride monomers, specifically, vinyl ester such as vinyl acetate, vinyl propionate, vinyl stearate, and the like; vinyl ether having an alkyl group, such as methyl vinyl ether, ethyl vinyl ether, octyl vinyl ether, lauryl vinyl ether, and the like; vinylidene halide such as vinylidene chloride, and the like; unsaturated carboxylic acid and acid anhydride thereof, such as acrylic acid, methacrylic acid, fumaric acid, maleic acid, itaconic acid, maleic anhydride, itaconic anhydride, and the like; unsaturated carboxylic acid ester, such as methyl acrylate, ethyl acrylate, monomethyl maleate, dimethyl maleate, butyl benzyl maleate, and the like; aromatic vinyl compound, such as

styrene, α-methyl styrene, divinyl benzene, and the like; unsaturated nitrile, such as acrylonitrile or methacrylonitrile, and the like; olefin such as ethylene or propylene, and the like; and crosslinkable monomers such as diallyl phthalate, and the like may be mentioned, and one or mixtures of two or more of them may be used. Among them, it is more preferable that the comonomers include vinyl acetate, because it has compatibility with vinyl chloride monomers, and may improve compatibility with a plasticizer constituting a resin composition after polymerization.

As explained above, the vinyl chloride resin may be prepared by polymerizing vinyl chloride monomers only, or vinyl chloride monomers and comonomers copolymerizable therewith, wherein the polymerization method is not specifically limited, and the polymerization may be conducted by common methods known in the art, such as suspension polymerization, emulsion polymerization or seed emulsion polymerization, and the like. Among them, when prepared by emulsion polymerization or suspension polymerization, compared to the case of being prepared by other polymerization methods, prepared vinyl chloride resin may have small and uniform average particle size. And, the average particle size and uniformity of vinyl chloride resin may be further controlled by controlling polymerization conditions during polymerization, and in the present disclosure, the average particle size($D_{50}$) of vinyl chloride resin that can be used may be 0.1 to 40 **μm,** more specifically 1 to 10 **μm,** and within these range, excellent dispersibility may be exhibited, and flowability of plasticized vinyl chloride resin composition may be further improved. If the average particle size ($D_{50}$) is greater than 40 **μm,** the dispersibility of vinyl chloride particles themselves may be low, and if it is less than 0.1 **μm,** there is a concern about deterioration of dispersibility due to aggregation between vinyl chloride resin particles. Meanwhile, in the present disclosure, the average particle size($D_{50}$) of the vinyl chloride resin may be measured by common particle size distribution measuring method, such as optical microscopy, light scattering method, and the like.

And, the polymerization degree and weight average molecular weight of the vinyl chloride resin may have an influence on the compatibility with components constituting the vinyl chloride resin composition, particularly a plasticizer, and processability of plastisol, and may be appropriately adjusted by controlling polymerization conditions during polymerization. Specifically, the polymerization degree of the vinyl chloride resin may be 700 to 1,700, or the weight average molecular weight(Mw) may be 45,000 to 200,000 g/mol. With the above ranges of polymerization degree and weight average molecular weight, dispersibility may be excellent, compatibility with a plasticizer may be good, and processability of plastisol may be improved. If the polymerization degree of vinyl chloride resin is less than 700 or Mw is less than 45,000 g/mol, due to insufficient properties, there is a concern about deterioration of durability and constructability of a wallpaper, and if the polymerization degree is greater than 1,700 or Mw is greater than 200,000 g/mol, there is a concern about deterioration of foaming ability. More specifically, the polymerization degree may be 900 or more and less than 1,050, or weight average molecular weight(Mw) may be 60,000 to 150,000 g/mol. Meanwhile, in the present disclosure, the weight average molecular weight(Mw) of vinyl chloride resin is standard polystyrene conversion value by gel permeation chromatography.

**b) Plasticizer**

And, in the vinyl chloride resin composition according to one embodiment, the plasticizer includes di(2-ethylhexyl)cyclohexane-1,4-dicarboxylate(DEHCH) alone, or a mixture of DEHCH and a compound represented by the above Chemical Formula 1, thereby lowering the viscosity of the vinyl chloride resin composition at room temperature, and preventing viscosity increase even at low temperature during winter. Thus, the amount of highly volatile viscosity depressant added may be minimized. And, the plasticizer exhibits excellent compatibility with additives included in the vinyl chloride resin composition, and may increase gelation speed of the resin composition to improve productivity.

In the plasticizer, di(2-ethylhexyl)cyclohexane-1,4-dicarboxylate(DEHCH) is a compound represented by the following Chemical Formula I, and is also shortened as DEHCH.

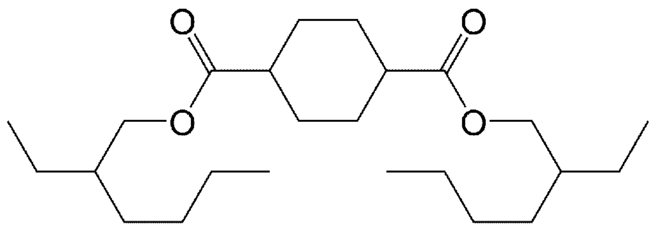

(I)

DEHCH has low viscosity at room temperature and low temperature, and thus, may realize excellent coatability, and it has rapid gelation speed and excellent foaming property. And, it may minimize generation of volatile organic compounds, and thus, has high stability to environment.

And, a plasticizer in a wallpaper easily permeates into the surroundings by diffusion, and if it permeates into a paper layer, it is highly probable that dye in a plaster board base paper may be transferred to the wallpaper surface.

However, since DEHCH has excellent migration resistance, the amount of diffusion outside of a wallpaper is small, and thus, less permeates into paper, thereby preventing dye transfer. And, since it is not easily mixed with ink compared to DOTP, it is favorable for discoloration resistance. Fig. 1 is a schematic diagram showing discoloration mechanisms generated in wallpapers due to dyes in plaster boards, when using conventional plasticizer DOTP, and when using DEHCH of the present disclosure. Referring to Fig 1, in the wallpaper using DOTP, the plasticizer spreads and dye in the plaster board base paper is diffused to the outside of the wallpaper, while in case DEHCH is used, spreading of the plasticizer is small, and thus, transfer of dye to the outside of the wallpaper can be prevented.

And, in case the plasticizer comprises a mixture of DEHCH and a compound represented by the above Chemical Formula 1, migration of DEHCH may be further inhibited, while maintaining the excellent property of DEHCH as a plasticizer.

The compound represented by the above Chemical Formula 1 is an ester compound of citric acid and $C_{2-8}$ alcohol, and although not theoretically limited, due to the interaction such as hydrogen bonds between the ester groups and DEHCH ester groups, and the like, the plasticizer does not leak outside the vinyl chloride resin.

More specifically, in the Chemical Formula 1, it is preferable that each of $R_2$ to $R_4$ is independently, butyl or octyl.

Representative examples of the compound represented by the Chemical Formula 1 may include tributylcitrate(TBC), tri(butyloctyl)citrate, trioctylcitrate or acetyltributylcitrate(ATBC), and the like, wherein tri(butyloctyl)citrate commonly refers to compounds in which a part of $R_2$ to $R_4$ of the Chemical Formula 1 is butyl, and the remainder is octyl.

The compound represented by the Chemical Formula 1 is commercially available, or may be prepared by a method as shown in the Reaction Formula 1.

[Reaction Formula 1]

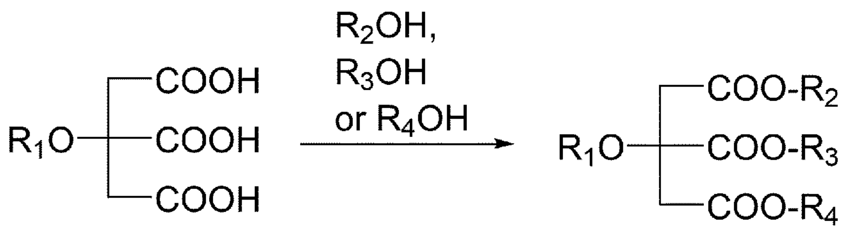


The reaction is an esterification reaction of citric acid or acetyl citrate and $C_{2-8}$ alcohol, and the compound may be prepared by one reaction or by sequentially conducting reactions with varying reactants, according to the structure of $R_2$ to $R_4$. As the reaction conditions, esterification reaction conditions commonly used in the art may be used.

In the vinyl chloride resin composition according to one embodiment, in case the plasticizer comprises a mixture of DEHCH and a compound of the Chemical Formula 1, the weight ratio of the two compounds may be preferably 9.5:1 to 1:9.5. When the compounds are included at the above weight ratio, not only migration resistance of the plasticizer may be effectively improved, but also thermal stability and foaming property of the resin composition may be improved. If the weight ratio of DEHCH and the compound represented by the Chemical Formula 1 is less than 1:9.5, the content of DEHCH may be too small, and thus, there is a concern about deterioration of thermal stability and foaming property of the resin composition. More preferably, the weight ratio of DEHCH and the compound represented by the Chemical Formula 1 may be 9:1 to 5:5, even more preferably 9:1 to 6:4.

The plasticizer may be included in the amount of 50 to 90 parts by weight, based on 100 parts by weight of the vinyl chloride resin. If the content of the plasticizer is less than 50 parts by weight, the viscosity of the vinyl chloride resin composition or plastisol may increase, and thus, coatability may be deteriorated, or flexibility of the product may be deteriorated, and if it is greater than 90 parts by weight, bleeding effect wherein a plasticizer leaks on the surface of a molded article may be easily generated, and thus, the surface may become sticky, causing problems in the final product. Considering excellent effect for viscosity decrease and bleeding inhibition according to the control of the content of a plasticizer based on vinyl chloride resin, the plasticizer may be more particularly included in the amount of 60 to 80 parts by weight, based on 100 parts by weight of the vinyl chloride resin.

**c) Viscosity depressant**

The viscosity depressant performs a function for lowering the viscosity of the vinyl chloride resin composition to improve processability, and specifically, carboxylic acid ester-based compounds may be used.

The carboxylic acid ester-based viscosity depressant has excellent compatibility with the above described plasticizer and vinyl chloride resin, and has low volatility, and thus, when used in a vinyl chloride resin composition, may decrease the amount of volatile organic compounds generated.

Specifically, the viscosity depressant may be carboxylic acid ester represented by the following Chemical Formula 2, prepared by the esterification reaction of $C_{8\sim22}$ carboxylic acid with alcohol having $C_{8\sim22}$ alkyl group:

[Chemical Formula 2]

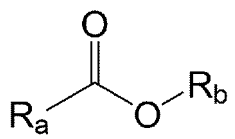

In the Chemical Formula 2 $R_a$ and $R_b$ are each independently, a $C_{8\sim22}$ linear or branched alkyl group, such as n-octyl, t-butyl, n-nonyl, or n-decyl.

And, as commercially available viscosity depressant, BYK LP-R 22274™, Viscobyk™ 5025, 5125 and 5050, Jayflex™ 615 or Exxsol™ D100, and the like may be used, and among them, BYK LP-R 22274™, which has excellent compatibility with the above described plasticizer and thus has small migration, and has rapid gelation speed, may be more preferably used.

And, the viscosity depressant may have a density at 20°C of 0.85 to 0.9 g/cm$^3$, more specifically 0.87 to 0.9 g/cm$^3$, and a solidification point of -7 °C or less, more specifically -10 to - 40 °C, and a flash point of 120 °C or more, more specifically 130 to 200 °C. If it fulfills the above described density, solidification point and flash point, it may have rapid gelation speed and excellent viscosity depressing capability, and thus, may further improve processability of the resin composition.

The viscosity depressant may be included in the content of 5 to 20 parts by weight, based on 100 parts by weight of the vinyl chloride resin. If the content of the viscosity depressant is less than 5 parts by weight, due to high viscosity of the formulation, there is a concern about generation of defects such sol drop in the processing operation, and if it is greater than 20 parts by weight, foaming property of a wallpaper may be deteriorated, and due to excessive viscosity decrease, there is a concern about deterioration of moldability. Considering the remarkable effects for preventing defect generation and moldability deterioration according to control of the content of a viscosity depressant based on vinyl chloride resin, the viscosity depressant may be more specifically included in the content of 10 to 20 parts by weight, based on 100 parts by weight of the vinyl chloride resin.

**d) Dispersant**

The dispersant is adsorbed on the surface to decrease attractive force between particles, and prevents reaggregation, thereby facilitating movement of particles, and stabilizing viscosity and behavior of a resin composition.

In the vinyl chloride resin composition according to one embodiment, as the dispersant, one or more acidic ester-based compounds having excellent dispersibility may be used. The acidic ester-based compounds not only exhibit excellent dispersibility in vinyl chloride resin, but also lowers the viscosity of a formulation, thus exhibiting additional viscosity decrease effect.

Specifically, as the acidic ester-based compounds, phosphoric acid ester-based compounds, such as phosphoric acid ester, and the like; or fatty acid esters, such as stearyl cetyl stearates(CETS), ethylene glycol distearate(EGDS), glyceryl monooleate(GMO), pentaerythritol distearate(PEDS), pentaerythritol tetrastearate(PETS), glyceryl monostearate(GMS), stearyl stearate, distearyl phthalate, and the like may be mentioned, and one compound or two or more compounds may be used. Among them, phosphoric acid ester-based compounds may be preferably used. And, BYK-LP W 21809™, and the like are commercially available.

And, the dispersant may have a density at 20 °C of 0.9 to 1.3 g/cm$^3$, more specifically 0.90 to 1.1 g/cm$^3$, and an acid value of 80 to 120 mgKOH/g, more specifically 90 to 100 mgKOH/g. In case it fulfills the above density and acid value conditions, it may not only exhibit excellent dispersibility, but also further improve the effect for decreasing the viscosity of a resin composition.

And, the dispersant may have a flash point of 80 °C or more, more specifically 100 to 300 °C. By having a flash point of the above range, it may improve thermal stability of a resin composition.

The dispersant may be included in the content of 0.5 to 5 parts by weight, based on 100 parts by weight of the vinyl chloride resin. If the content of the dispersant is less than 0.5 parts by weight, there is a concern about bad dispersibility of a formulation, and if it is greater than 5 parts by weight, there is a concern about deterioration of foaming property of a wallpaper. Considering the remarkable effects in terms of dispersibility and foaming property according to control of the content of the dispersant based on the vinyl chloride resin, the dispersant may be more specifically included in the content of 1 to 3 parts by weight, based on 100 parts by weight of the vinyl chloride resin.

**e) Other additives**

The vinyl chloride resin composition according to one embodiment may further comprise one or more additives selected from the group consisting of a stabilizer, a blowing agent, filler and titanium dioxide ($TiO_2$) according to the properties to be improved in the composition.

The stabilizer is added to prevent change in various properties generated when HCl is separated in the vinyl chloride resin to form chromophore of a polyene structure, thus causing scission or cross-linking of the main chain, and it may be a liquid compound. As specific examples, Na-Zn-based compounds, Ca-Zn-based compounds, K-Zn-based compounds, Ba-Zn-based compounds, organic Tin-based compounds, metallic soap-based compounds, phenolic compounds, or phosphorous ester-based compounds, and the like may be mentioned, and among them, one or mixtures of two or more may be used. As more specific examples, Na-Zn-based compounds; Ca-Zn-based compounds; K-Zn-based compounds; Ba-Zn-based compounds; organic tin-based compounds, such as mercaptide-based compounds, maleic acid-based compounds or carboxylic acid-based compounds; metallic soap-based compounds, such as Mg-stearate, Ca-stearate, Pb-stearate, Cd-stearate, or Ba-stearate, and the like; phenolic compounds; or phosphorous ester-based compounds, and the like may be mentioned, and among them, Na-Zn-based compounds or K-Zn-based compounds may be more preferably used.

The stabilizer is included in the content of 0.5 to 7 parts by weight, more preferably 1 to 4 parts by weight, based on 100 parts by weight of the vinyl chloride resin. If the content of the stabilizer is less than 0.5 parts by weight, thermal stability may be lowered, and if it is greater than 7 parts by weight, thermal stability may be exhibited more than necessary.

And, as the blowing agent, chemical agents or physical agents may be mentioned, and among them, one or mixtures of two or more may be used.

Specifically, the chemical blowing agent is not specifically limited as long as it is a compound decomposed above a specific temperature to generate gas, and as examples, azodicarbonamide, azodiisobutyro-nitrile, benzenesulfonhydrazide, 4,4-oxybenzene sulfonyl-semicarbazide, p-toluene sulfonyl semicarbazide, barium azodicarboxylate, N,N'-dimethyl-N,N'-dinitrosoterephthalamide, trihydrazino triazine, and the like may be mentioned. And, sodium bicarbonate, potassium bicarbonate, ammonium bicarbonate, sodium carbonate, ammonium carbonate, and the like may be also mentioned.

And, as the physical blowing agent, inorganic blowing agents such as nitrogen, argon, water, air, helium, and the like; organic blowing agents, such as aliphatic hydrocarbon having 1 to 9 carbon atoms; aliphatic alcohol having 1 to 3 carbon atoms; halogenated aliphatic hydrocarbon having 1 to 4 carbon atoms, and the like may be mentioned. And, as the aliphatic hydrocarbon compounds, methane, ethane, propane, normal butane, isobutene, normal pentane, isopentane, or neopentane, and the like may be mentioned; as the aliphatic alcohols, methanol, ethanol, normal propanol, or isopropanol, and the like may be mentioned; and as the halogenated aliphatic hydrocarbon compounds, methyl fluoride, perfluoromethane, ethyl fluoride, 1,1-difluoroethane(HFC-152a), 1,1,1-trifluoroethane(HFC-143a), 1,1,1,2-tetrafluoroethane(HFC-134a), 1,1,2,2-tetrafluoromethane(HFC-134), 1,1,1,3,3-pentafluorobutane(HFC-365mfc), 1,1,1,3,3-pentafluoropropane(HFC.sub.13 245fa), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, methyl chloride, methylene chloride, ethyl chloride, 1,1,1-trichloroethane, 1,1-dichloro-1-fluoroethane(HCFC-141b), 1-chloro-1,1-difluoroethane(HCFC-142b), chlorodifluoromethane(HCFC-22), 1,1-dichloro-2,2,2-trifluoroethane(HCFC-123), 1-chloro-1,2,2,2-tetrafluoroethane(HCFC-124), trichloromonofluoromethane(CFC-11), dichlorodifluoromethane(CFC-12), trichlorotrifluoroethane(CFC-113), 1,1,1-trifluoroethane, pentafluoroethane, dichlorotetrafluoroethane(CFC-114), chloroheptafluoropropane, or dichlorohexafluoropropane, and the like may be mentioned. Among them, one or mixtures of two or more may be used as the blowing agent.

The blowing agent may be included in the content of 0.5 to 7 parts by weight, based on 100 parts by weight of the vinyl chloride resin. If the content of the blowing agent is less than 0.5 parts by weight, the amount of gas generated for blowing may be too small, and thus, blowing effect may be insignificant or cannot be expected, and if it is greater than 7 parts by weight, the amount of gas generated may be too large, and thus, it may be difficult to expect required properties.

And, the filler is used to improve productivity, and dry touch of the vinyl chloride resin composition. As specific examples of the filler, calcium carbonate, calcite, talc, kaolin, silica, alumina, magnesium hydroxide or clay, and the like may be mentioned, and among them, one or mixtures of two or more may be used.

The filler may be included in the content of 30 to 150 parts by weight, more preferably 50 to 130 parts by weight, based on 100 parts by weight of the vinyl chloride resin. If the content of the filler is less than 30 parts by weight, dimensional stability and economical efficiency may be lowered, and if it is greater than 150 parts by weight, foam surface may not be good, and processability may be deteriorated.

And, the titanium dioxide ($TiO_2$) functions for improving whiteness and cover of the vinyl chloride resin composition.

The titanium dioxide may be included in the content of 1 to 20 parts by weight, more preferably 3 to 15 parts by weight, based on 100 parts by weight of the vinyl chloride resin. If the content of titanium dioxide is less than 1 part by weight, whiteness and cover may be deteriorated, and thus, color may not be properly formed after printing, and if it is greater than 20 parts by weight, there is a concern about deterioration of the properties of foam surface.

More specifically, when the vinyl chloride resin composition according to one embodiment comprises, based on 100 parts by weight of the vinyl chloride resin, 0.5 to 7 parts by weight of a stabilizer, 0.5 to 7 parts by weight of a blowing agent, 30 to 150 parts by weight of filler, and 1 to 20 parts by weight of titanium dioxide ($TiO_2$), as additives, discoloration resistance may be further improved.

Meanwhile, the vinyl chloride resin composition according to one embodiment may be prepared by a method commonly known in the art, using the vinyl chloride resin, plasticizer, viscosity depressant, dispersant, and optionally, additives, and the method is not specifically limited.

Since the vinyl chloride resin composition having the above composition comprises a plasticizer comprising di(2-ethylhexyl)cyclohexane-1,4-dicarboxylate or a mixture of DEHCH and a compound represented by the above Chemical Formula 1, in combination with a carboxylic acid ester-based viscosity depressant and acidic ester-based dispersant, it exhibits excellent migration resistance, thereby preventing dye trabsfer, and exhibiting remarkably improved discoloration resistance.

And, the vinyl chloride resin composition has significantly reduced content of plasticizer diffused outside when applied in a wallpaper, and the like, thus preventing generation of environmental problems.

And, since the vinyl chloride resin composition comprises an acidic ester-based dispersant together with the plasticizer, it may minimize the content of viscosity depressant and liquid stabilizer added to decrease the viscosity of plastisol. Thus, the amount of volatile organic compounds generated from the viscosity depressant and liquid stabilizer may be reduced, and tackiness generated during the production process of a wallpaper may be prevented. Specifically, the vinyl chloride resin composition according to one embodiment may have a viscosity of 4,000 to 12,000 cps, more specifically 6,000 to 10,000 cps, and within these ranges, stable processability may be exhibited.

Meanwhile, the viscosity of the vinyl chloride resin composition may be measured using a Brookfield viscometer (spindle #6, 20RPM), after aging in a 25 °C constant temperature oven for 1 hour.

The vinyl chloride resin composition may be used as flooring, wallpaper, tarpaulin, artificial leather, toys, or coating materials of the lower part of automobiles, and the like, and among them, when applied for the preparation of environmentally friendly silk wallpapers, it may prevent discoloration, and thus, may be particularly useful.

Hereinafter, the present disclosure will be explained in more detail with reference to the following Examples. However, these examples are presented only as the illustrations of the present disclosure, and the scope of the invention is not limited thereby. And, "%" and "part" representing contents in the following Examples and Comparative Examples are based on weight, unless otherwise described.

**Example 1**

Based on 100 parts by weight vinyl chloride resin(EL-103™, produced by Hanwha Chemical, polymerization degree 950±50), 70 parts by weight of DEHCH, 3 parts by weight of a liquid stabilizer (LFX910D-1™, produced by KD Chem), 10 parts by weight of titanium dioxide ($TiO_2$), 125 parts by weight of calcite filler(Omya-10™, produced by mya Korea Company), 3 parts by weight of a blowing agent (DWPX03™, produced by Dongjin Semichem), 10 parts by weight of carboxylic acid ester-based viscosity depressant(BYK LP-R 22274™, produced by BYK, 20°C density=0.879 g/cm$^3$, solidification point: ← 13 °C, flash point: >140 °C) and 1 part by weight a dispersant(BYK-LP W 21809™, produced by BYK, 20 °C density=1.092 g/cm$^3$, acid value: about 100 mgKOH/g, flash point: >100 °C) were mixed in Mathis mixer for 10 minutes to prepare plastisol.

**Example 2**

Based on 100 parts by weight of vinyl chloride resin(EL-103, produced by Hanwha Chemical, polymerization degree 950±50), 62 parts by weight of DEHCH, 3 parts by weight of liquid stabilizer(LFX910D-1™, produced by KD Chem), 14 parts by weight of titanium dioxide ($TiO_2$), 80 parts by weight of calcite filler (Omya-10™, produced by Omya Korea Company), 3 parts by weight of blowing agent (DWPX03™, produced by Dongjin Semichem), 10 parts by weight of carboxylic acid ester-based viscosity depressant (BYK LP-R 22274™, produced by BYK) and 2 parts by weight of dispersant(BYK-LP W 21809™, produced by BYK) were mixed in Mathis mixer for 10 minutes to prepare plastisol.

**Example 3**

Plastisol was prepared by the same method as Example 1, except that a plasticizer comprising DEHCH and tributyl citrate (TBC) at a weight ratio of 8:2 was used instead of the plasticizer of Example 1.

**Example 4**

Plastisol was prepared by the same method as Example 1, except that a plasticizer comprising DEHCH and TBC at a weight ratio of 9.5:0.5 was used instead of the plasticizer of Example 1.

**Example 5**

Plastisol was prepared by the same method as Example 1, except that a plasticizer comprising DEHCH and TBC at a weight ratio of 5:5 was used instead of the plasticizer of Example 1.

**Example 6**

Plastisol was prepared by the same method as Example 1, except that a plasticizer comprising DEHCH and TBC at a weight ratio of 4:6 was used instead of the plasticizer of Example 1.

**Example 7**

Plastisol was prepared by the same method as Example 1, except that a plasticizer comprising DEHCH and acetyltributylcitrate (ATBC) at a weight ratio of 8:2 was used instead of the plasticizer of Example 1.

**Comparative Example 1**

Plastisol was prepared by the same method as Example 1, except that DOTP was used instead of the DEHCH plasticizer of Example 1.

**Comparative Example 2**

Plastisol was prepared by the same method as Example 1, except that a hydrocarbon-based viscosity depressant(VISCOBYK 5130™, produced by BYK, density=0.86 g/cm$^3$, solidification point: <-15 °C, flash point: >150 °C) was used instead of the carboxylic acid ester-based viscosity depressant of Example 1.

**Comparative Example 3**

Plastisol was prepared by the same method as Example 2, except that a fatty acid dispersant (BYK 1162™, produced by BYK) was used instead of the dispersant of Example 2.

**Comparative Example 4**

Plastisol was prepared by the same method as Example 2, except that a polyurethane-based dispersant(BYK 9077™, produced by BYK, acid value=70 mgKOH/g, density: 0.96 g/cm$^3$, flash point: 185 °C) was used instead of the dispersant of Example 2.

**Comparative Examples 5 to 10**

Plastisol was prepared by the same method as Example 1, except that each component was used with the content described in the following Table 1.

[Table 1]

| | Composition of vinyl chloride resin composition | | | | | | | |
|---|---|---|---|---|---|---|---|---|
| | Kind of plastici zer (weight ratio) | Contentof plastic izer (parts by weight) | Viscosi ty depress ant (parts by weight) | Dispers ant(parts by weight) | Liquid stabili zer (parts by weight) | Titani um dioxid e (parts by weight ) | Filler (parts by weight ) | Blowin g agent (parts by weight ) |
| Exampl e 1 | DEHCH | 70 | 10 | 1 | 3 | 10 | 125 | 3 |

(continued)

| | Composition of vinyl chloride resin composition | | | | | | | |
|---|---|---|---|---|---|---|---|---|
| | Kind of plastici zer (weight ratio) | Content of plastic izer (parts by weight) | Viscosi ty depress ant (parts by weight) | Dispers ant (parts by weight) | Liquid stabili zer (parts by weight) | Titani um dioxid e (parts by weight ) | Filler (parts by weight ) | Blowin g agent (parts by weight ) |
| Exampl e 2 | DEHCH | 62 | 10 | 2 | 3 | 14 | 80 | 3 |
| Exampl e 3 | DEHCH: TB C (8: 2) | 70 | 10 | 1 | 3 | 10 | 125 | 3 |
| Exampl e 4 | DEHCH: TB C (9.5:0.5 ) | 70 | 10 | 1 | 3 | 10 | 125 | 3 |
| Exampl e 5 | DEHCH: TB C (5: 5) | 70 | 10 | 1 | 3 | 10 | 125 | 3 |
| Exampl e 6 | DEHCH: TB C (4: 6) | 70 | 10 | 1 | 3 | 10 | 125 | 3 |
| Exampl e 7 | DEHCH: AT BC (8: 2) | 70 | 10 | 1 | 3 | 10 | 125 | 3 |
| Compar ative Exampl e 1 | DOTP | 70 | 10 | 1 | 3 | 10 | 125 | 3 |
| Compar ative Exampl e 2 | DEHCH | 70 | 10 (hydroc arbon-based viscosi ty depress ant) | 1 | 3 | 10 | 125 | 3 |
| Compar ative Exampl e 3 | DEHCH | 62 | 10 | 2 (fatty acid dispers ant) | 3 | 14 | 80 | 3 |
| Compar ative Exampl e 4 | DEHCH | 62 | 10 | 2 (Polyur ethane dispers ant) | 3 | 14 | 80 | 3 |
| Compar ative Exampl e 5 | DEHCH | 40 | 10 | 1 | 3 | 10 | 125 | 3 |
| Compar ative Exampl e 6 | DEHCH | 100 | 10 | 1 | 3 | 10 | 125 | 3 |

(continued)

| | Composition of vinyl chloride resin composition | | | | | | | |
|---|---|---|---|---|---|---|---|---|
| | Kind of plasticizer (weight ratio) | Content of plasticizer (parts by weight) | Viscosity depressant (parts by weight) | Dispersant (parts by weight) | Liquid stabilizer (parts by weight) | Titanium dioxide (parts by weight ) | Filler (parts by weight ) | Blowing agent (parts by weight ) |
| Comparative Example 7 | DEHCH | 70 | 1 | 1 | 3 | 10 | 125 | 3 |
| Comparative Example 8 | DEHCH | 70 | 25 | 1 | 3 | 10 | 125 | 3 |
| Comparative Example 9 | DEHCH | 70 | 10 | 0.1 | 3 | 10 | 125 | 3 |
| Comparative Example 10 | DEHCH | 70 | 10 | 7 | 3 | 10 | 125 | 3 |
| *In the Table 1, the content unit of each component 'parts by weight' is a relative content unit based on 100 parts by weight of vinyl chloride resin. | | | | | | | | |

**Experimental Example 1**

<Evaluation of migration according to plasticizer>

Wallpapers were prepared using the plastiosls of Example 1 and Comparative Example 1 respectively using DEHCH and DOTP as a plasticizer. The prepared wallpapers were positioned between an oilpaper to prepare each sample, and the prepared sample was left under severe conditions (temperature: 60 °C, pressure: put a weight of 5kg on a sample having a diameter of 3cm) for 24 hours, and change in the weight of the wallpaper was observed. Using the weight values of the wallpaper measured before/after the test under severe conditions, migration was evaluated according to the following Mathematical Formula 1. And, the results were shown in Fig. 2.

[Mathematical Formula 1]

Migration(%)=[(weight of a wallpaper before test under severe conditions - weight of a wallpaper after leaving under severe conditions for 24 hours)/ weight of a wallpaper before test under severe conditions ] X 100

As the result of test, in the case of Comparative Example 1 using DOTP as a plasticizer, migration was 4.01%, while in the case of Example 1 using DEHCH, migration was 2.23%, which significantly decreased compared to Comparative Example 1.

And, as the result of the test, discoloration of the oilpaper by liquid additives diffusing from the wallpaper into the oilpaper was observed, and the results were respectively shown in Fig. 3a and Fig. 3b (Fig. 3a: Comparative Example

1, Fig. 3b: Example 1).

As the amount of liquid additives (plasticizer and viscosity depressant) diffusing from the wallpaper is larger, the oilpaper changed deeply. As the results of the test, in the case of Comparative Example 1 using DOTP, a large quantity of liquid additives (plasticizer and viscosity depressant) diffused from the wallpaper sample and seriously wetted the oilpaper, while in the case of Example 1, wetting significantly decreased compared to Comparative Example 1. This is because in the case of Example 1 using DEHCH as a plasticizer, the viscosity of the liquid mixture was thin, and thus, the amount of liquid additives such as a plasticizer and a viscosity depressant was decreased by about 10% or more, compared to Comparative Example 1. Thus, it can be expected that the plastisol of Example may be favorable for discoloration resistance, compared to Comparative Example.

<Evaluation of viscosity change according to plasticizer>

In order to evaluate the influence of a plasticizer on the viscosity of plastisol, the viscosities of the plastisols of Example 1 and Comparative Example 1 respectively using DEHCH and DOTP were measured.

Specifically, the plastisols respectively prepared in Example 1 and Comparative Example 1 were aged in a 25 °C constant temperature oven for 1 hour, and then, the viscosities were measured using Brookfield viscometer (spindle #6, 20RPM). The results were shown in Fig. 4.

Although a plasticizer of the same amount was mixed, the plastisol of Example 1 showed remarkably decreased viscosity compared to Comparative Example 1.

**Experimental Example 2**

<Evaluation of viscosity change according to viscosity depressant>

For the plastisols of Example 1 and Comparative Example 2, the viscosity changes over time were observed. For the plastisols of Example 1 and Comparative Example 2, when 1 hour passed and 1 day passed in a 25°C constant temperature oven, viscosities were measured under the conditions described in the following Table 2 by the same method as Experimental Example 1, and the results were shown in the following Table 2 together.

[Table 2]

| | | Comparative Example 2 | Example 1 |
|---|---|---|---|
| kind of viscosity depressant | | Hydrocarbon-based | Carboxylic acid ester-based |
| Viscosity after 1 hour (cps) | 20RPM | 5,100 | 6,050 |
| | 5RPM | 8,400 | 11,200 |
| Viscosity after 1 day (cps) | 20RPM | 9,780 | 6,960 |
| | 5RPM | 10,160 | 11,920 |
| Time-dependent viscosity change rate | | 1.92 | 1.15 |

As the results of the test, although Comparative Example 2 had lower viscosity after 1 hour, Example 1 had lower viscosity after 1 day, and also exhibited excellent time-dependent viscosity change.

<Evaluation of migration according to viscosity depressant>

For the plastisols respectively prepared in Example 1 and Comparative Example 2, migrations were compared and evaluated according to viscosity depressant by the same method as the method for evaluating migration according to plasticizer in Experimental Example 1. The results were shown in the following Table 3.

[Table 3]

| | Comparative Example 2 | Example 1 |
|---|---|---|
| Migration(%) | 4.24 | 2.23 |

As the results of the test, the plastisol of Example 1 using a carboxylic acid ester-based viscosity depressant exhibited decreased migration, compared to Comparative Example 2 using a hydrocarbon-based viscosity depressant.

**Experimental Example 3**

<Evaluation of viscosity change according to dispersant>

For the plastisols of Example 2 and Comparative Examples 3 and 4, when 1 hour passed and 1 day passed in a 25°C constant temperature oven, viscosities were measured under the conditions described in the following Table 4 by the same method as Experimental Example 1, and the results were shown in the following Table 4.

[Table 4]

| | | Example 2 | Comparative Example 3 | Comparative Example 4 |
|---|---|---|---|---|
| Viscosity after 1 hour (cps) | 20RPM | 9,300 | 14,800 | 11,450 |
| | 5RPM | 16,800 | 28,400 | 21,000 |

Example 2 using an acidic ester-based dispersant exhibited remarkably low viscosity compared to the plastisols of Comparative Example 3 and 4, due to the excellent dispersion effect of the dispersant.

**Experimental Example 4**

For the plastisols prepared in Examples 1 to 7, and Comparative Examples 1 to 10, viscosity, migration, wetting and foaming were respectively measured and evaluated, and the results were shown in the following Table 5.

(1) Viscosity

The plastisols prepared in Examples 1 to 7, and Comparative Examples 1 to 10 were respectively aged in a 25°C constant temperature oven for 1 hour, and then, the viscosities were measured using Brookfield viscometer (spindle #6, 20 RPM).

(2) Migration (%)

Using each plastisol prepared in Examples 1 to 7, and Comparative Examples 1 to 10, a wallpaper was prepared. The prepared wallpapers was positioned between an oilpaper to prepare each sample, and the prepared sample was left under severe conditions (temperature: 60°C, pressure: put a weight of 5kg on a sample having a diameter of 3cm), and then, change in the weight of the wallpaper was observed. Using the weight values measured before/after the test under severe conditions, migration was evaluated according to the following Mathematical Formula 1.

[Mathematical Formula 1]

Migration(%)=[(weight of a wallpaper before test under severe conditions - weight of a wallpaper after leaving under severe conditions for 24 hours)/ weight of a wallpaper before test under severe conditions ] X 100

(3) Wetting

After the (2) evaluation of migration, discoloration of the oilpaper was observed with the unaided eye, and wetting of the oilpaper by liquid additives(plasticizer and viscosity depressant) was scored according to the following standard and evaluated. Specifically, as discoloration is more severe due to wetting by liquid additives(plasticizer and viscosity depressant), the score is closer to 1 point(bad), and as discoloration is less, the score is closer to 5 point(excellent).

(4) Foaming property

The plastisols prepared in Example 1 to 7, and Comparative Example 1 to 10 were thinly coated on the papers used as wallpapers, and foamed at 230 °C for 40 seconds, and then, the cross-sections were cut and the cell states were observed with optical microscope, and the size, shape and uniformity of arrangement of cells were scored and evaluated. Specifically, as the size, shape and arrangement of cells are irregular and nonuniform, the score is closer to 1 point (bad), and as they are uniform and foaming rate is higher, the score is closer to 5 point (excellent).

[Table 5]

| | Effects | | | |
|---|---|---|---|---|
| | Viscosity (20RPM, cps) | Migration (%) | Wetting | Foaming property |
| Example 1 | 6,050 | 2.23 | 4 | 5 |
| Example 2 | 9,300 | 1.93 | 5 | 5 |
| Example 3 | 6,370 | 1.74 | 5 | 4 |
| Example 4 | 6,240 | 2.21 | 4 | 5 |
| Example 5 | 8,450 | 1.78 | 5 | 4 |
| Example 6 | 9,100 | 1.73 | 5 | 4 |
| Example 7 | 6,570 | 2.06 | 4 | 5 |
| Comparative Example 1 | 10,250 | 4.01 | 2 | 5 |
| Comparative Example 2 | 5,100 | 4.24 | 2 | 5 |
| Comparative Example 3 | 14,800 | 2.03 | 4 | 4 |
| Comparative Example 4 | 11,450 | 1.98 | 5 | 3 |
| Comparative Example 5 | 30,250 | 1.53 | 5 | 3 |
| Comparative Example 6 | 4,320 | 3.21 | 3 | 4 |
| Comparative Example 7 | 17,790 | 1.30 | 5 | 5 |
| Comparative Example 8 | 3,500 | 5.23 | 1 | 2 |
| Comparative Example 9 | 14,870 | 2.17 | 4 | 5 |
| Comparative Example 10 | 3,420 | 4.63 | 2 | 1 |

As the results of experiments, the plastisols of Example 1 to 7 had viscosities measured under conditions of 25 °C, 20 RPM, of 6,000 to 10,000 cps, low migration of 2.3% or less, and excellent wetting and foaming property of 4 or more, respectively.

To the contrary, in Comparative Example 1 using the conventional plasticizer, compared to Examples 1, 3 to 7 having the same compositions except a plasticizer, although foaming property was equivalent, viscosity increased and migration significantly increased to greater than 4%, and thus, wetting was also deteriorated.

And, in Comparative Example 2 using a hydrocarbon-based viscosity depressant, compared to Example 1, migration significantly increased to greater than 4, and wetting was also deteriorated significantly.

From the results, it can be seen that when combining a plasticizer comprising DEHCH and a carboxylic acid ester-based viscosity depressant, migration may be lowered, and thus, wetting may be significantly improved.

And, in the case of Comparative Example 3 using a conventional fatty acid dispersant, viscosity was greater than 12,000cps, and foaming property was deteriorated. And, in the case of Comparative Example 4 using a conventional polyurethane dispersant, compared to Comparative Example 3, viscosity and migration were relatively low, thus exhibiting improved wetting, but foaming property was deteriorated.

And, in the case of Comparative Example 5 having insufficient plasticizer content, the viscosity of plastisol remarkably increased and bad foaming property was exhibited, and in the case of Comparative Example 6 having too high plasticizer content, migration was greater than 3%, and wetting was also deteriorated.

And, in the case of Comparative Example 7 wherein a carboxylic acid ester-based viscosity depressant was used but the content was too low, viscosity excessively increased, and in the case of Comparative Example 8 wherein the carboxylic acid ester-based viscosity depressant was excessively used, viscosity significantly decreased, migration

significantly increased, and wetting and foaming were deteriorated.

And, in the case of Comparative Example 9 wherein the requirement of the acidic ester-based dispersant content was not fulfilled, viscosity significantly increased, and in the case of Comparative Example 10 wherein the dispersant was excessively used, migration increased, and wetting and foaming were deteriorated.

From the results, it can be seen that when a vinyl chloride resin composition simultaneously fulfills constructional requirement and content range requirement, it has appropriate viscosity and exhibits excellent foaming property, has reduced migration, and thus, realizing improvement in wetting and discoloration resistance.

## Claims

**1.** A vinyl chloride resin composition for a wallpaper comprising:

a) 100 parts by weight of vinyl chloride resin,
b) 50 to 90 parts by weight of a plasticizer;
c) 5 to 20 parts by weight of a carboxylic acid ester-based viscosity depressant ; and
d) 0.5 to 5 parts by weight of acidic ester-based dispersant;

wherein the b) plasticizer comprises di(2-ethylhexyl)cyclohexane-1,4-dicarboxylate, or a mixture of di(2-ethylhexyl)cyclohexane-1,4-dicarboxylate and a compound represented by the following Chemical Formula 1:

[Chemical Formula 1]

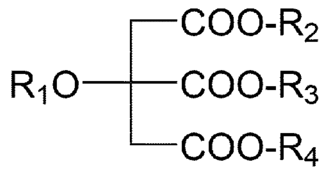

in the Chemical Formula 1,

$R_1$ is hydrogen or acetyl, and
$R_2$ to $R_4$ are each independently, $C_{2-8}$ alkyl.

**2.** The vinyl chloride resin composition for a wallpaper according to claim 1, wherein the vinyl chloride resin has a polymerization degree of 700 to 1,700 or weight average molecular weight of 45,000 to 200,000 g/mol.

**3.** The vinyl chloride resin composition for a wallpaper according to claim 1, wherein the compound represented by the Chemical Formula 1 is tributylcitrate, tri(butyloctyl)citrate, trioctylcitrate, or acetyltributylcitrate.

**4.** The vinyl chloride resin composition for a wallpaper according to claim 1, wherein the weight ratio of the di(2-ethylhexyl)cyclohexane-1,4-dicarboxylate and the compound of the Chemical Formula 1 is 9.5:1 to 1:9.5.

**5.** The vinyl chloride resin composition for a wallpaper according to claim 1, wherein the viscosity depressant is carboxylic acid ester represented by the following Chemical Formula 2:

[Chemical Formula 2]

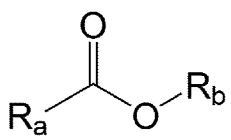

in the Chemical Formula 2, $R_a$ and $R_b$ are each independently, a $C_{8-22}$ linear or branched alkyl group.

**6.** The vinyl chloride resin composition for a wallpaper according to claim 1, wherein the viscosity depressant has a

density at 20°C of 0.85 to 0.9 g/$cm^3$, a solidification point of - 7 °C or less, and a flash point of 120 °C or more.

**7.** The vinyl chloride resin composition for a wallpaper according to claim 1, wherein the dispersant is a phosphoric acid ester-based compound, a fatty acid ester-based compound, or a mixture thereof.

**8.** The vinyl chloride resin composition for a wallpaper according to claim 1, wherein the dispersant has a density at 20°C of 0.9 to 1.3 g/$cm^3$, and an acid value of 80 to 120 mgKOH/g.

**9.** The vinyl chloride resin composition for a wallpaper according to claim 1, further comprising one or more additives selected from the group consisting of a stabilizer, a blowing agent, filler and titanium dioxide.

**10.** The vinyl chloride resin composition for a wallpaper according to claim 9, wherein the stabilizer is one or more selected from the group consisting of Na-Zn-based compounds, Ca-Zn-based compounds, K-Zn-based compounds, Ba-Zn-based compounds, organic Tin-based compounds, metallic soap compounds, phenolic compounds, and phosphorous ester-based compounds.

**11.** The vinyl chloride resin composition for a wallpaper according to claim 9, wherein the blowing agent comprises a chemical blowing agent, a physical blowing agent or a mixture thereof.

**12.** The vinyl chloride resin composition for a wallpaper according to claim 9, wherein the filler is one or more selected from the group consisting of calcium carbonate, calcite, talc, kaolin, silica, alumina, magnesium hydroxide and clay.

**13.** The vinyl chloride resin composition for a wallpaper according to claim 1, wherein the composition comprising

a) 100 parts by weight of vinyl chloride resin,
b) 60 to 80 parts by weight of a plasticizer comprising di(2-ethylhexyl)cyclohexane-1,4-dicarboxylate, or a mixture of di(2-ethylhexyl)cyclohexane-1,4-dicarboxylate and a compound represented by the Chemical Formula 1;
c) 10 to 20 parts by weight of a carboxylic acid ester-based viscosity depressant; and
d) 1 to 3 parts by weight of an acidic ester-based dispersant; and

further comprises 0.5 to 7 parts by weight of a stabilizer, 0.5 to 7 parts by weight of a blowing agent, 30 to 150 parts by weight of filler and 1 to 20 parts by weight of titanium dioxide.

**14.** The vinyl chloride resin composition for a wallpaper according to claim 1, wherein the viscosity of the composition (measured under condition of 20RPM using Brookfield viscometer, after aging at 25 °C for 1 hour) is 4,000 to 12,000 cps.

**15.** A wallpaper comprising the vinyl chloride resin composition for a wallpaper according to claim 1.

【Fig. 1】

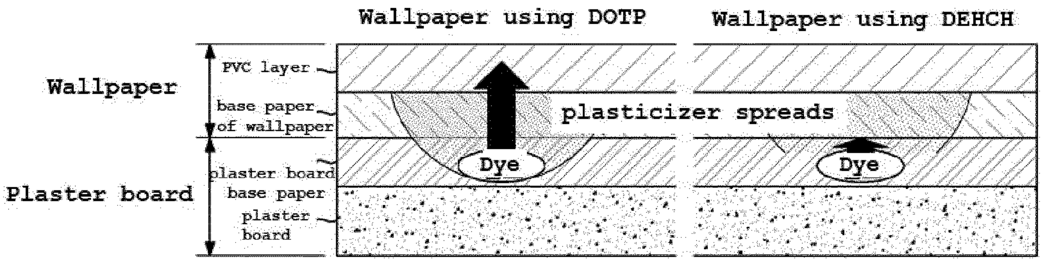
Wallpaper using DOTP
Wallpaper using DEHCH
Wallpaper
PVC layer
base paper of wallpaper
plasticizer spreads
Plaster board
plaster board base paper
plaster board
Dye
Dye

【Fig. 2】

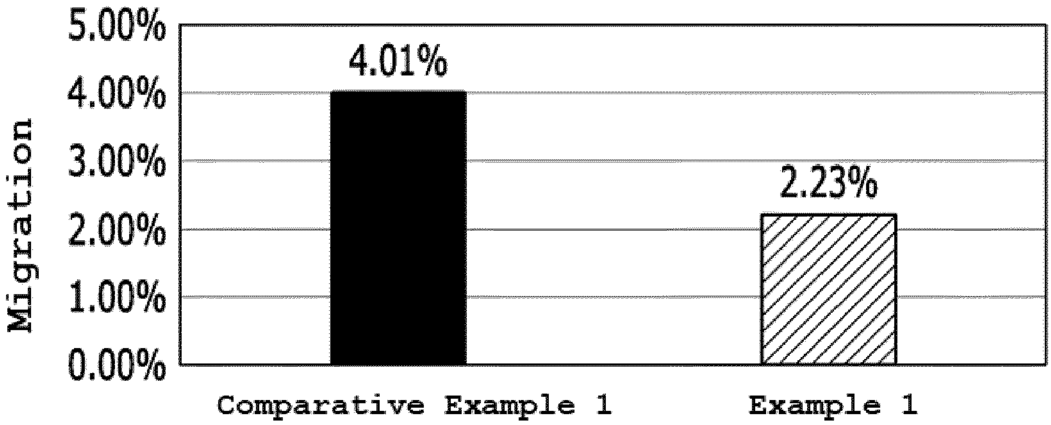
Migration
5.00%
4.00%
3.00%
2.00%
1.00%
0.00%
4.01%
2.23%
Comparative Example 1
Example 1

【Fig. 3a】

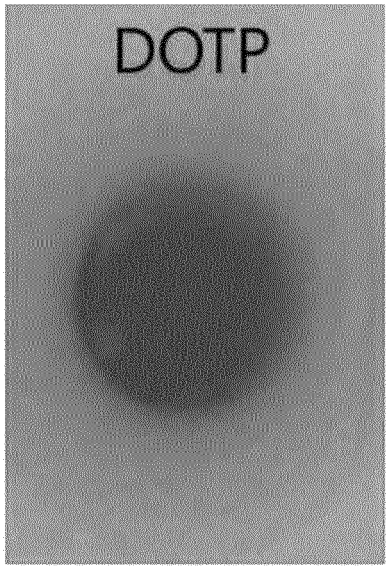


【Fig. 3b】

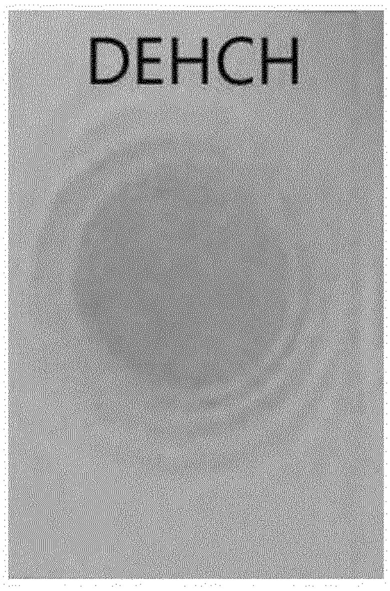

【Figure 4】

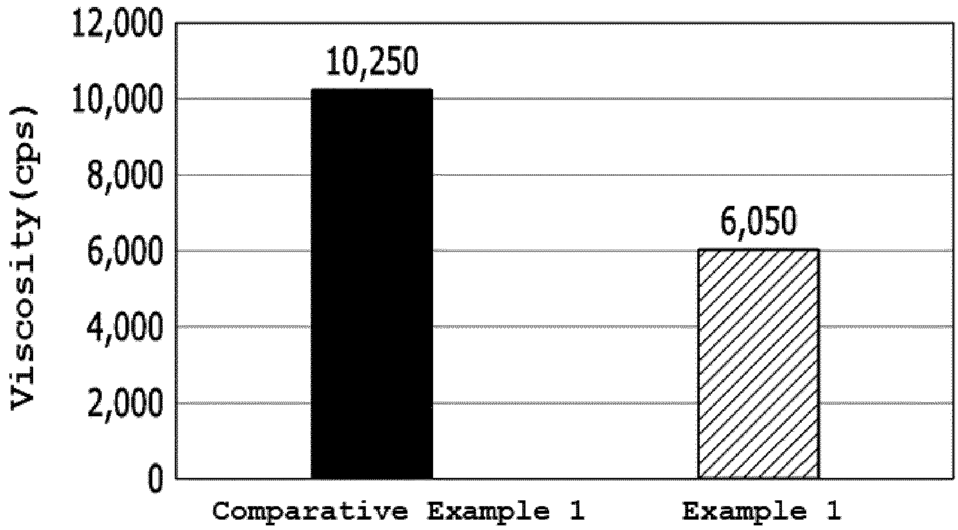
12,000
10,000
8,000
6,000
4,000
2,000
0
Viscosity(cps)
10,250
6,050
Comparative Example 1
Example 1

## INTERNATIONAL SEARCH REPORT

International application No.
**PCT/KR2019/004371**

A. CLASSIFICATION OF SUBJECT MATTER

***C08L 27/06(2006.01)i, C08K 5/00(2006.01)i, C08K 5/101(2006.01)i, C08K 5/103(2006.01)i, C08K 5/521(2006.01)i, C08J 9/04(2006.01)i, D21H 27/20(2006.01)i***

According to International Patent Classification (IPC) or to both national classification and IPC

B. FIELDS SEARCHED

Minimum documentation searched (classification system followed by classification symbols)
C08L 27/06; B32B 27/10; C08J 9/04; C08K 5/00; C08K 5/09; C08K 5/092; C08K 5/098; C08K 5/101; C08K 5/103; C08K 5/521; D21H 27/20

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal), STN (Registry, Caplus), Google & Keywords: polyvinyl chloride resin, plasticizer, viscosity depressant, dispersing agent, di(2-ethylhexyl)cyclohexane-1,4-dicarboxylate, citrate, PVC, DEHCH

C. DOCUMENTS CONSIDERED TO BE RELEVANT

| Category* | Citation of document, with indication, where appropriate, of the relevant passages | Relevant to claim No. |
|---|---|---|
| Y | KR 10-2016-0047221 A (HANWHA CHEMICAL CORPORATION) 02 May 2016<br>See claims 1-10; and paragraphs [0024]-[0026], [0036], [0056]. | 1-15 |
| Y | KR 10-2009-0067946 A (KOREX CORPORATION) 25 June 2009<br>See abstract; claims 1-5; paragraph [0043]; and table 3. | 1-15 |
| A | KR 10-1711761 B1 (LG CHEM, LTD.) 02 March 2017<br>See claims 1-10. | 1-15 |
| A | US 8283411 B2 (GOSSE, C. et al.) 09 October 2012<br>See the entire document. | 1-15 |
| A | KR 10-2017-0015424 A (LG CHEM, LTD.) 08 February 2017<br>See the entire document. | 1-15 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 JULY 2019 (12.07.2019) | **15 JULY 2019 (15.07.2019)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |

Form PCT/ISA/210 (second sheet) (January 2015)

INTERNATIONAL SEARCH REPORT
Information on patent family members

International application No.
PCT/KR2019/004371

| Patent document cited in search report | Publication date | Patent family member | Publication date |
|---|---|---|---|
| KR 10-2016-0047221 A | 02/05/2016 | CN 107075218 A | 18/08/2017 |
| | | EP 3211029 A1 | 30/08/2017 |
| | | WO 2016-064125 A1 | 28/04/2016 |
| KR 10-2009-0067946 A | 25/06/2009 | None | |
| KR 10-1711761 B1 | 02/03/2017 | KR 10-2013-0120629 A | 05/11/2013 |
| US 8283411 B2 | 09/10/2012 | AU 2002-338836 A1 | 14/04/2003 |
| | | CN 102002200 A | 06/04/2011 |
| | | CN 102002200 B | 15/01/2014 |
| | | CN 102408646 A | 11/04/2012 |
| | | CN 103772848 A | 07/05/2014 |
| | | CN 1558927 A | 29/12/2004 |
| | | EP 1432758 A1 | 30/06/2004 |
| | | EP 1432758 B1 | 26/11/2008 |
| | | EP 2045286 A1 | 08/04/2009 |
| | | EP 2045286 B1 | 24/04/2013 |
| | | EP 2258760 A1 | 08/12/2010 |
| | | EP 2258760 B1 | 25/06/2014 |
| | | US 2005-0020718 A1 | 27/01/2005 |
| | | US 2007-0293646 A1 | 20/12/2007 |
| | | US 2008-0274364 A1 | 06/11/2008 |
| | | US 2009-0291304 A1 | 26/11/2009 |
| | | US 2011-0040001 A1 | 17/02/2011 |
| | | US 2012-0071598 A1 | 22/03/2012 |
| | | US 2013-0225737 A1 | 29/08/2013 |
| | | US 7297738 B2 | 20/11/2007 |
| | | US 7413813 B2 | 19/08/2008 |
| | | US 7585571 B2 | 08/09/2009 |
| | | US 7855340 B2 | 21/12/2010 |
| | | US 8084534 B2 | 27/12/2011 |
| | | US 8653184 B2 | 18/02/2014 |
| | | WO 03-029339 A1 | 10/04/2003 |
| KR 10-2017-0015424 A | 08/02/2017 | CN 104284917 A | 14/01/2015 |
| | | CN 104284933 A | 14/01/2015 |
| | | CN 104284933 B | 10/02/2016 |
| | | CN 104395386 A | 04/03/2015 |
| | | CN 104395386 B | 07/09/2016 |
| | | CN 104603193 A | 06/05/2015 |
| | | CN 104603193 B | 01/03/2017 |
| | | EP 2821431 A1 | 07/01/2015 |
| | | EP 2821431 B1 | 07/09/2016 |
| | | EP 2837646 A1 | 18/02/2015 |
| | | EP 2837646 B1 | 30/08/2017 |
| | | EP 2851392 A1 | 25/03/2015 |
| | | EP 2851392 B1 | 07/09/2016 |
| | | EP 2851393 A1 | 25/03/2015 |

Form PCT/ISA/210 (patent family annex) (January 2015)

INTERNATIONAL SEARCH REPORT
Information on patent family members

International application No.
PCT/KR2019/004371

| Patent document cited in search report | Publication date | Patent family member | Publication date |
|---|---|---|---|
| | | EP 2851393 B1 | 07/12/2016 |
| | | JP 2015-520185 A | 16/07/2015 |
| | | JP 5907311 B2 | 26/04/2016 |
| | | KR 10-1447376 B1 | 18/12/2014 |
| | | KR 10-1462797 B1 | 21/11/2014 |
| | | KR 10-1495426 B1 | 23/02/2015 |
| | | KR 10-1642561 B1 | 25/07/2016 |
| | | KR 10-1720381 B1 | 27/03/2017 |
| | | KR 10-1829163 B1 | 13/02/2018 |
| | | KR 10-2014-0132656 A | 18/11/2014 |
| | | KR 10-2014-0132657 A | 18/11/2014 |
| | | KR 10-2014-0132681 A | 18/11/2014 |
| | | KR 10-2014-0132682 A | 18/11/2014 |
| | | KR 10-2014-0132683 A | 18/11/2014 |
| | | KR 10-2014-0132697 A | 18/11/2014 |
| | | KR 10-2017-0015423 A | 08/02/2017 |
| | | TW 201443013 A | 16/11/2014 |
| | | TW 201446852 A | 16/12/2014 |
| | | TW 201512166 A | 01/04/2015 |
| | | TW 201623210 A | 01/07/2016 |
| | | TW I510535 B | 01/12/2015 |
| | | TW I542577 B | 21/07/2016 |
| | | TW I593673 B | 01/08/2017 |
| | | TW I599559 B | 21/09/2017 |
| | | US 2014-0336294 A1 | 13/11/2014 |
| | | US 2014-0336319 A1 | 13/11/2014 |
| | | US 2014-0336320 A1 | 13/11/2014 |
| | | US 2015-0025186 A1 | 22/01/2015 |
| | | US 2015-0225538 A1 | 13/08/2015 |
| | | US 9062179 B2 | 23/06/2015 |
| | | US 9127141 B2 | 08/09/2015 |
| | | US 9200138 B2 | 01/12/2015 |
| | | US 9505907 B2 | 29/11/2016 |
| | | US 9587087 B2 | 07/03/2017 |
| | | WO 2014-181920 A1 | 13/11/2014 |
| | | WO 2014-181922 A1 | 13/11/2014 |
| | | WO 2014-182083 A1 | 13/11/2014 |
| | | WO 2014-200138 A1 | 18/12/2014 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020180044632
- KR 1020190041998